Europäisches Patentamt

European Patent Office

Office européen des brevets

(11) Veröffentlichungsnummer: **0 428 988 A2**

## (12) EUROPÄISCHE PATENTANMELDUNG

(21) Anmeldenummer: 90121767.9

(22) Anmeldetag: 14.11.90

(51) Int. Cl.⁵: **D06N 7/00, B32B 27/12**

(30) Priorität: 18.11.89 DE 3938426

(43) Veröffentlichungstag der Anmeldung:
29.05.91 Patentblatt 91/22

(84) Benannte Vertragsstaaten:
**AT BE DE FR GB IT LU NL**

(71) Anmelder: **MÖLLNER CHENILLE-FABRIK KARL W. HEERKLOTZ GMBH + CO. KG**
**Görlitzerring 31**
**W-2410 Mölln-Waldstadt(DE)**

(72) Erfinder: **Bloch, Günther**
**Posener Strasse 62**
**W-2410 Mölln(DE)**

(74) Vertreter: **Heldt, Gert, Dr. Dipl.-Ing.**
**Neuer Wall 59 III**
**W-2000 Hamburg 36(DE)**

(54) Schichtstoffkombination und Verfahren zu seiner Herstellung.

(57) Eine Schichtstoffkombination besitzt eine Trägerschicht, die auf mindestens einer ihrer beiden Oberflächen mit einer Deckschicht und einer die Deckschicht auf ihrer der Trägerschicht abgewandten Seite bedeckenden Lackschicht beschichtet ist. Die Trägerschicht ist ein Vlies. Die Deckschicht ist zusammen mit der Lackschicht mit einem im feuchten Zustand klebenden Naßkleber auf das Vlies aufgeklebt. Das mit der Deckschicht und der Lackschicht beklebte Vlies weist eine Stärke von höchstens 100 um auf. Die Deckschicht besitzt eine auf die Lackschicht aufgedampfte Metallschicht, die nach ihrer Aufdampfung mit ihrer der Lackschicht abgewandten Seite mit dem Vlies verklebt ist. Auf die Lackschicht ist ein Farbüberzug aufgetragen. Die Kombination aus der Deck- und Lackschicht weist gemeinsam mit dem Vlies eine Stärke von 50 bis 100 um mit einer Toleranz von +/- 10 % auf. Auf beide Oberflächen des Vlieses kann jeweils eine Deckschicht und jeweils eine die Deckschicht auf ihrer dem Vlies abgewandten Seite bedeckende Lackschicht aufgeklebt sein. Die Schichtstoffkombination ist nähbar und/oder raffbar. Sie weist ein Knitterverhalten wie ein Kleiderstoff auf.

EP 0 428 988 A2

Die Erfindung betrifft eine Schichtstoffkombination aus einer Trägerschicht, die auf mindestens einer ihrer beiden Oberflächen mit einer Deckschicht und einer die Deckschicht auf der der Trägerschicht abgewandten Seite bedeckenden Lackschicht beschichtet ist. Darüber hinaus betrifft die Erfindung ein Verfahren zur Herstellung einer Schichtstoffkombination aus einer Trägerschicht mit mindestens einer Deckschicht und einer die Deckschicht auf der der Trägerschicht abgewandten Seite bedeckenden Lackschicht, bei bei die Deckschicht zusammen mit der Lackschicht mittels eines auf die der Trägerschicht zugewandten Seite der Deckschicht aufgretragenen Klebers auf die Trägerschicht aufgeklebt wird.

Eine derartige Schichtstoffkombination, die insbesondere aus dem Bereich der mit einer Metallschicht kaschierten Papiere bekannt ist, besitzt den Nachteil einer erheblichen Steifigkeit, die die Verwendung dieser Schichtstoffkombination in einer Reihe von Anwendungsfällen auschließt. Beispielsweise kann sie nicht in solchen Fällen verwendet werden, in denen der Eindruck von weichem Fließen der Schichtstoffkombination erweckt werden soll. Vielmehr präsentiert sie sich dem Betrachter in einer vorgegebenen Steifigkeit, die beispielsweise ihre Verwendung als locker fließender Dekorstoff ausschließt. Auch zur Herstellung von Kleidern, beispielsweise von Karnevalskostümen ist diese Schichtstoffkombination nicht geeignet. Sie paßt sich nicht nur den Konturen eines menschlichen Körpers nicht in gewünschter Weise an, sondern erzeugt auch nicht den Eindruck, locker und leicht den menschlichen Körper zu umgeben.

Diese bekannten Schichtstoffe stellen Kombinationen von Stoffen dar, von denen nicht nur jeder einzelne Stoff den gewünschten Eindruck der Leichtigkeit stört. In manchen Fällen würde ein einzel ner Schichtstoffanteil in der Lage sein, den gewünschten Eindruck der Leichtigkeit zu erwekken. Er erzeugt jedoch gemeinsam mit den anderen verwendeten Schichtstoffen eine Kombination, die steif und wenig flexibel ist.

Aufgabe der vorliegenden Erfindung ist es daher, die Schichtstoffkombination der einleitend genannten Art so zu verbessern, daß sie einen leicht fließenden Faltenwurf ermöglicht.

Diese Aufgabe wird erfindungsgemäß dadurch gelöst, daß die Trägerschicht ein Vlies ist und die Deckschicht zusammen mit der Lackschicht mit einem im feuchten Zustand klebenden Naßkleber auf das Vlies aufgeklebt ist und das mit der Deckschicht und mit der Lackschicht beklebte Vlies eine Stärke von höchstens 100 um mit einer Toleranz von +/- 10 % aufweisen.

Diese Schichtstoffkombination besitzt die Voraussetzungen, die gegeben sein müssen, damit sie in den Fällen Anwendung finden kann, in denen ein fließender Faltenwurf benötigt wird. Darüber hinaus wird durch die Verarbeitung dieser Schichtstoffkombination mit Hilfe eines Naßklebers erreicht, daß diese Schichtstoffkombination in sehr engen Grenzen seine definierte Dicke einhalten kann, so daß durch Dickenunterschiede keine Störungen des Faltenwurfs entstehen können. Schließlich wird mit der Verwendung des Naßklebers erreicht, daß die Flexibilität des Stoffes erhalten bleibt. Der Naßkleber bildet auch in seinem getrockneten Zustand eine flexible Schicht, die ein Fließen des Stoffes begünstigt. Er dringt im übrigen in die Poren soweit ein, daß diese nicht vollkommen dicht gesetzt werden, so daß jede der einzelnen miteinander verbundenen Schichten ihre Flexiblität behält. Das verwendete Vlies dient als Trägerschicht und ergibt erst zusammen mit der Deckschicht und der Lackschicht den gewünschten und zur Weiterverarbeitung verwertbaren Stoff. Erst zusammen mit der aufgeklebten Deck- und Lackschicht ist die gewünschte stoffliche Einheit mit der gewünschten Konsistenz und Flexibilität hergestellt. Das verwendete Vlies hat eine weitgehend ebene Oberfläche. Dadurch haftet auf ihr mittels des Klebers die Deckschicht mit der auf ihr haftenden Lackschicht gut.

Der zur Herstellung der Schichtstoffkombination verwendete Naßkleber gleicht Unebenheiten der Deckschicht und des Vlieses aus, ohne deswegen deren Poren zu verschließen. Der Naßkleber ist hochviskos und dringt nur soweit in die Oberfläche ein, daß die Flexibilität des Vlieses dadurch nicht Schaden nimmt. Er stellt eine elastische Zwischenschicht zwischen dem Vlies und der Deckschicht dar, die auch bei starken mechanischen Beanspruchungen, wie Knittern und Raffen, weder von der Deckschicht noch vom Vlies abplatzt, sondern ihrerseits mit den angrenzenden Flächen gut verhaftet ist. Darüber hinaus stellt die Kleberschicht eine zähe Zwischenschicht dar, die auch beim Durchstechen, z. B. mit einer Nähnadel, ein Weiterreißen sowohl der Deckschicht als auch des Vlieses verbindert. Darüber hinaus gestattet sie eine dünne Ausbildng der Deckschicht, ohne daß diese ihren Glanz verliert. Die dünne Deckschicht verhindert auf Grund ihrer geringen Wandstärke, daß sie beim Durchstechen der Schichtstoffkombination einreißt.

Mit den bisher bekannt gewordenen Verfahren sind Schichtstoffe hergestellt worden, die nicht in der Lage waren, den gestellten Ansprüchen an Flexibilität und leichter Beweglichkeit zu genügen. Vielmehr entstanden relativ steife und für die Herstellung von Kleidung nicht geeignete Schichtstoffkombinationen.

Weitere Aufgabe der vorliegenden Erfindung ist es daher, das Verfahren der einleitend genannten Art so zu verbessern, daß die mit seiner Hilfe hergestellten Schichtstoffkombinationen den Ansprüchen an Leichtigkeit und lockerem Faltenwurf genügen.

Diese Aufgabe wird erfindungsgemäß dadurch gelöst, daß zunächst die Lackschicht und anschließend die Deckschicht auf eine Trägerfolie aufgetragen wird, das ein in seinem feuchten Zustand klebender Naßkleber auf die der Trägerfolie abgewandte Seite der Deckschicht aufgetragen wird und das Trägerschicht ein Vlies im Anschluß an das Auftragen des Naßklebers mit der Deckschicht verklebt wird und anschließend die Trägerfolie von der Lackschicht getrennt wird.

Mit Hilfe dieses Herstellungsverfahrens könnne die gewünschten Dekorstoffe relativ leicht und kostengünstig hergestellt werden. Das Herstellungsverfahren ist in einem solchen Umfange vereinfacht, daß es mit relativ einfachen Maschinen, die kostengünstig arbeiten, durchgeführt werden kann. Auf umfangreiche Erhitzungs- und Abkühlungsanlagen, die beispielsweise bei Verwendung eines Heißklebers erforderlich gewesen wären, kann weitgehend verzichtet werden. Notwendig ist allenfalls eine Trocknungsanlage, in der der Naßkleber nach der Durchführung der Verklebung getrocknet wird. Hierdurch wird auch Energie eingespart, und das zur Herstellung der Schichtstoffkombination mit einem Vlies verwendete Verfahren ist dadurch erheblich kostengünstiger als die bisher bekannten Verfahren.

Auf diese Weise entsteht eine Schichtstoffkombination, die die gewünschte Flexibilität besitzt und gut weiterverarbeitet werden kann. Im Hinblick auf das erfindungsgemäße Verfahren kann ein sehr dünner Vlies Verwendung finden, der gleichmäßig bearbeitet werden kann, so daß eine homogene Schichtstoffkombination entsteht. Diese reißt auch bei erheblichen mechanischen Beanspruchungen nicht ein. Sie kann vernäht werden und ist knitterfähig, ohne daß deswegen auch in einer hochgläzenden Oberfläche Knitterfalten entstehen. Bruchstellen sind nicht zu erwarten, da der Stoff leicht und in einem gewissen Umfange elastisch ist, so daß die entstehenden Falten durch Aushängen der Schichtstoffkombination beseitigt werden können.

Gemäß einer bevorzugten Ausführungsform der Erfindung besteht die Deckschicht aus einer auf die Lackschicht aufgedampfte Metallschicht, die nach ihrer Aufdampfung mit ihrer der Lackschicht abgewandten Seite mit dem Vlies verklebt ist. Mit Hilfe dieser Metallschicht erhält die Schichtstoffkombination eine raffinierte Oberfläche, die beliebig farblich gestaltet werden kann. Diese oberfläche kann noch dadurch verfeinert werden, daß die Lackschicht bedruckbar ausgebildet wird.

Gemäß einer weiteren bevorzugten Ausführungsform der Erfindung besteht die Deckschicht aus einem auf die Lackschicht aufgetragenen Farbüberzug. Dieser Farbüberzug kann in besondere Weise flexibel ausgebildet werden, so daß die entsprechend ausgebildete Schichtstoffkombination als Dekorstoff weich fällt und dadurch einen weiten Anwendungsbereich beispielsweise zur Ausbildung von Vorhängen und Kleiderstoffen aufweist. Obgleich diese Farbüberzüge sehr dünn sind, könnne sie mit Hilfe des Naßklebers gut auf dem Vlies befestigt werden.

Gemäß einer weiteren bevorzugten Ausführungsform der Erfindung wird auf die Trägerfolie vor dem Auftrag der Lackschicht eine Trennschicht aufgetragen und die Deckschicht und die Lackschicht beim Übertragen auf das Vlies von der Trennschicht gelöst. Mit Hilfe dieser Trennschicht wird die Ablösung der Trägerfolie von der Lackschicht problemlos möglich, ohne daß darauf geachtet werden müßte, daß eine günstige Kombination von Trägerfolie einerseits und Lackschicht andererseits erfolgt. Das Verfahren kann daher weitgehend unabhängig von der Wahl der Trägerfolie mit beliebigen Lackschichten durchgeführt werden. Die Lackschicht kann daher ausschließlich nach dem Bedarf ausgewählt werden, der notwendig ist, um die Deckschicht nach außen gegen zu erwartenden Einflüsse abzudecken und andererseits eine möglichst weit gespannte Anwendung der Schichtstoffkombination zu ermöglichen. Darüber hinaus kann bei der Herstellung noch eine flammenwidrige Ausstattung der Schichtstoffkombination aufgebracht werden. Diese Aufbringung ist im Zuge des Herstellungsverfahrens möglich.

Weitere Einzelheiten der Erfindung ergeben sich aus der nachfolgenden ausführlichen Beschreibung und den Zeichnungen, in denen bevorzugte Ausführungsformen der Erfindung beispielsweise veranschaulicht sind.

In den Zeichnungen zeigen:

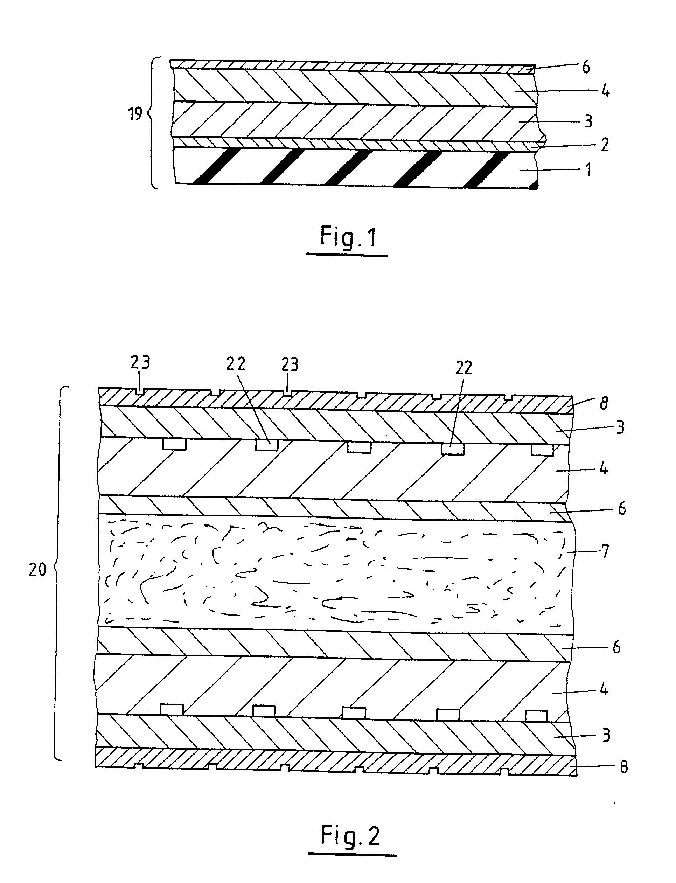

Figur 1: Querschnitte durch eine Trägerfolie mit auf sie aufgebrachten Schichten,

Figur 2: Querschnitt durch eine Schichtstoffkombination aus einem beidseitig beschichteten Vlies,

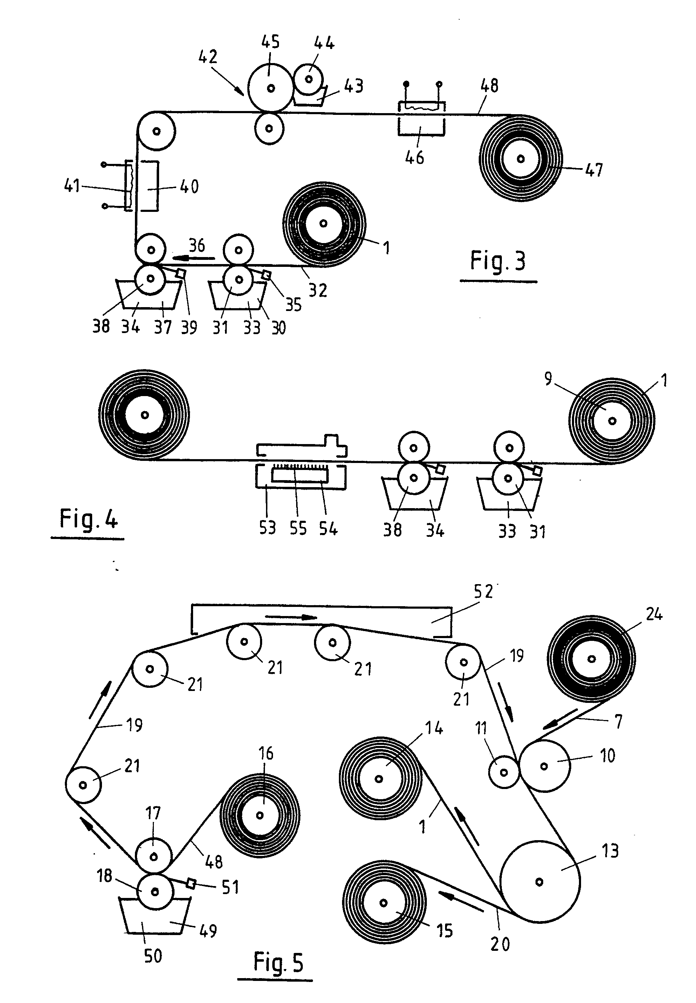

Figur 3: eine schematische Darstellung einer Anlage zum Auftragen einer Deckschicht aus Farbe,

Figur 4: eine schematische Darstellung einer Anlage zum Aufdampfen einer metallischen Deckschicht,

Figur 5: Schemaskizze einer Anlage zum Verkleben der Deckschicht einer Trägerfolie mit der Trägerschicht und anschliessendem Abtrennen der Trägerfolie und

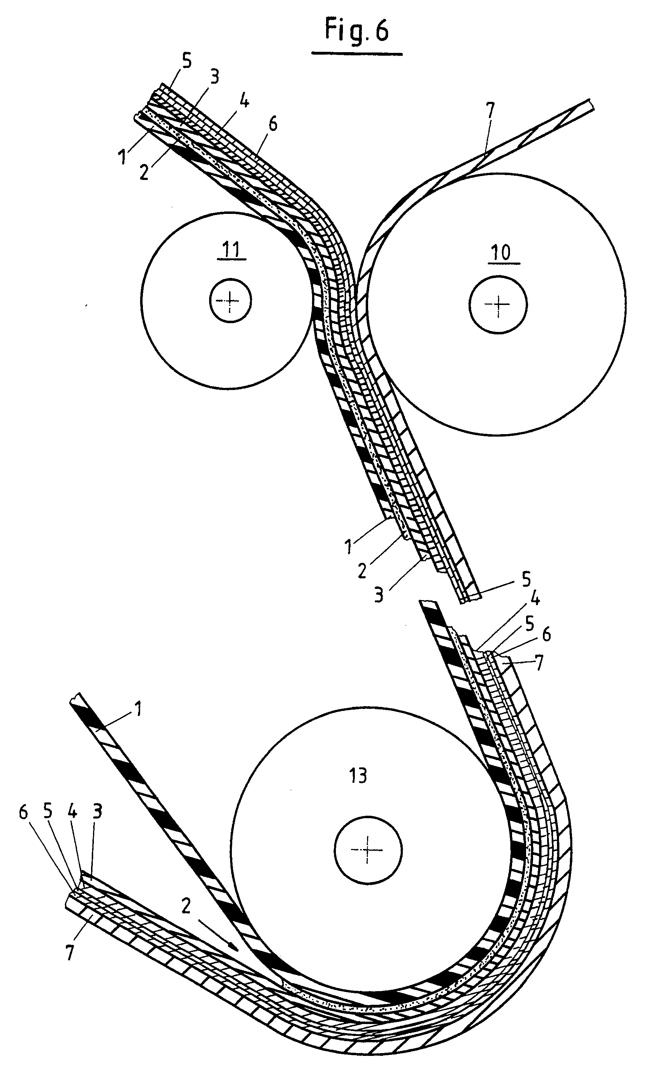

Figur 6: vergrößerter Ausschnitt einer Anlage zur Herstellung einer Schichtstoffkombination vom Beginn des Verklebens der Trägerschicht bis zum Trennen der Trägerfolie.

Eine Schichtstoffkombination besteht im wesentlichen aus einer als Vlies (7) ausgebildeten Trägerschicht, einer Kleberschicht (6), einer Deckschicht (4) und einer Lackschicht (3). Je nach Verwendungszweck und Weiterverarbeitung des beschichteten Vlieses (7) werden, deren Obergrenze 100 um ist. Die Lackschicht (3) ist einem kann seine Stärke innerhalb einer vorgegebenen Grenze gewählt Betrachter der Schichtstoffkombination zugewandt, während das Vlies (7) ihm abgewandt angeordnet ist.

Die Deckschicht (4) kann eine Metallschicht sein oder eine Farbschicht. Besteht die Deckschicht (4) aus Metall, beispielsweise aus Aluminium, dann besitzt sie an ihrer der Lackschicht (3) zugewandten Oberfläche einen metallischen Glanz. Eine aus einer Farbschicht bestehende Deckschicht kann durchsichtig sein und beim Betrachter optisch den Eindruck einer größeren Schichttiefe entstehen lassen.

Die Deckschicht (4) kann Vertiefungen (22) aufweisen. Die Vertiefungen (22) der Deckschicht (4) können sich dem Betrachter durch die Lackschicht (3) hindurch betrachtet beispielsweise als ein Schriftbild darstellen. Wenn die Deckschicht (4) eine Metallschicht ist, sind alle für die Metallisierung der Lackschicht (3) geeigneten Metalle, beispielsweise Aluminium verwendbar.

Die auf der dem Vlies (7) abgewandten Oberseite der Deckschicht (4) vorhandene Lackschicht (3) kann durchsichtig oder farbig sein. Bei Verwendung eines durchsichtigen Lackes erhält die Schichtstoffkombination die Farbe der Deckschicht (4) an solchen Stellen, an denen ein die Deckschicht (4) gegebenenfalls abdeckender Farbüberzug (8) ausgespart ist und die Sicht auf die Lackschicht (3) und die darunter befindliche Deckschicht (4) freigibt. Besondere Effekte werden durch Verwendung transparenter Farben der Lackschicht (3) hervorgerufen. Ist die Deckschicht (4) eine Metallschicht, dann erhält die Schichtstoffkombination im Bereich von Aussparungen (23) des Farbüberzugs (8) den metallisierenden Effekt der verwendeten Metallschicht. Es ist auch möglich, den metallischen Effekt durch die Verwendung von Metallfarben zu betonen.

Die Lackschicht (3) kann sich zum Bedrucken der Schichtstoffkombination eignen, ohne daß die Deckschicht (4) einer weiteren Behandlung unterzogen werden muß, um sie druckfähig zu gestalten. Zur Aufbringung des Druckes bedarf es lediglich der üblicherweise zum Drucken verwendeten Mittel.

Bei der Auswahl des Materials der Lackschicht (3) können verschiedene Anwendungsfälle Berücksichtigung finden. Insbesondere ist an die Verwendung eines Lackes zu denken, der sich bei den üblichen Reinigungsverfahren nicht von der Deckschicht (4) ablöst. Unter anderem sind Materialien wie Polyurethane, Mischungen aus Phenolformaldehyd, Polyester, Methylmethacrylat, Äthylenterephtalat, Äthylenisoephtalat und Mischungen aus Polyvinylacetat und Polyvinylchlorid verwendbar.

Die Lackschicht (3) ist sehr dünn, so daß der visuelle Eindruck einer darunter liegenden Deckschicht (4) nicht verfälscht wird. Sie ist außerdem auf der gesamten Fläche maßhaltig aufgetragen, so daß die Schichtstoffkombination von gleichmäßiger Dicke ist.

Als Naßkleber für die Kleberschicht (6) können Lösungsmittelkleber und wasserlösliche Kleber Verwendung finden. Der Kleber wird so dick aufgetragen, daß die Kleberschicht (6) eine elastische Zwischenlage zwischen der Deckschicht (4) einerseits und dem Vlies (7) ausbildet. Die Dicke der Kleberschicht (6) kann im Kaschierverfahren mit Kalanderwalzen (17, 18) relativ genau eingestellt werden. Sie kann aber auch auf andere Weise aufgetragen werden. Als Naßkleber werden solche Kleber verwendet, die bei den üblichen Waschvorgängen nicht abweichen und nicht ablösen, beispielsweise wachshaltige Klebstoffe oder Klebstoffe mit einem Isozyanat. Über die Lackschicht (3) kann sich ein Farbüberzug (8) erstrecken. Auf das Vlies (7) kann ein- oder beidseitig mittels entsprechender Kleberschichten (6) die Deckschicht (4) mit der sie bedeckenden Lackschicht (3) und dem Farbüberzug (8) aufgeklebt werden.

Mit Hilfe des Farbüberzugs (18) können farbliche Effekte hervorgerufen werden. Der Farbüberzug (8) kann sich entweder über die gesamte Fläche der Schichtstoffkombination erstrecken, oder nur über einen Teil der Fläche. Mit Aussparungen (23) im Farbüberzug (8) sind beispielsweise Schriftbilder und Figuren auf der Schichtstoffkombination zu realisieren. Die Aussparungen (23) des Farbüberzugs (8) können sich auf Vertiefungen im Farbüberzug (8) beschränken oder sich durch den gesamten Farbüberzug (8) bis zur Lackschicht (3) erstrecken. Es ist möglich, den Farbüberzug (8) zusammen mit der Lackschicht (3) und der Deckschicht (4) auf das Vlies (7) zu übertragen. Andererseits kann der Farbüberzug (8) auch nachträglich auf die Lackschicht (3) aufgetragen werden, nachdem die Lackschicht (3) und die Deckschicht (4) auf das Vlies (7) aufgebracht worden sind. Vorzugsweise ist der Farbüberzug (8) etwa so stark wie die Lackschicht (3). Er kann aber auch schwächer oder stärker als die Lackschicht (3) sein, besonders dann, wenn Aussparungen (23) im Farbüberzug (8) vorgesehen sind.

Ein Verfahren zur Herstellung der erfindungsgemäßen Schichtstoffkombination geht aus von einer Trägerfolie (1), auf die zunächst eine dünne Trennschicht (2), dann die Lackschicht (3) und schließlich die Deckschicht (4) aufgetragen wird. Wenn die Lackschicht (3) keine starke Affinität zur Trägerfolie (1) besitzt, kann auf die Trennschicht (2) verzichtet werden. Sie erleichtert lediglich das Trennen der Trägerfolie (1) von der Lackschicht (3), wenn nach dem Verkleben des Vlieses (7) die Trägerfolie (1) von der Schichtstoffkombination abgezogen werden soll.

Die Trennschicht (2) wird aus einem Bad (30) mit Hilfe einer Übertragungswalze (31) auf eine Oberfläche (32) der Trägerfolie (1) aufgetragen. Dabei befindet sich in dem Bad (30) ein Trennlack (33), der die Trennung der Trägerfolie (1) von einem die Lackschicht (3) ausbildenden Lack (34) begünstigt. Die Dicke der Trennschicht (2) wird mit Hilfe eines Abstreifers (35) eingestellt.

In Förderrichtung (36) der Trägerfolie (1) ist hinter dem Bad (30) ein zweites Bad (37 vorgesehen, in dem sich der Lack (34) befindet. Aus diesem zweiten Bad (37) wird der Lack (34) mit Hilfe einer Übertragungswalze (38) auf die Oberfläche (32) der Trägerfolie (1) aufgetragen. Die Dicke der Lackschicht (3) wird mit Hilfe eines Abstreifers (39) eingestellt. Nach der Auftragung der Lackschicht (3) verläuft die Trägerfolie (1) durch eine Trockenstation (40), in der die aufgetragenen Schichten (2, 3) getrocknet werden. Der Grad der Trocknung kann an einer innerhalb der Trockenstation (40) vorgesehenen Heizung (41) eingestellt werden.

Hinter der Trockenstation (40) ist ein weiteres Auftragwerk (42) vorgesehen, mit dessen Hilfe die Deckschicht (4) als Farbschicht aus einem dritten Bad (43) aufgetragen wird. Um die Dicke dieser Deckschicht (4) genau einhalten zu können, überträgt eine innerhalb des dritten Bades (43) rotierende Aufnehmerwalze (44) die aus dem Bad (43) aufgenomme Farbe aus eine Übertragungswalze (45). Auf dieser bildet sich eine hinsichtlich ihrer Dicke genau eingestellte Schicht aus, die als Deckschicht (4) auf die getrocknete Lackschicht (3) aufgetragen wird. Je nach der Art der aus dem Bad (43) aufgetragenen Farbe wird die Deckschicht (4) in einer Trokkenstation (46) getrocknet und auf eine Spule (47) aufgewickelt. Es ist jedoch auch möglich, unmittelbar im Anschluß an die Auftragung der Deckschicht (4) die beschichtete Trägerfolie (48) unmittelbar mit der Kleberschicht (6) zu versehen.

Wird die beschichtete Trägerfolie (48) zunächst auf die Spule (47) aufgewickelt, so kann diese als eine Abwickelspule (16) an den Anfang eines Verfahrensablaufes genommen werden, durch den die Deckschicht (4) auf das Vlies (7) übertragen wird. Zur diesem Zwecke wird die beschichtete Trägerfolie (48) von der Abwickelspule (16) abgewickelt und von den Kaschierwalzen (17, 18) mit der Kleberschicht (6) versehen. Zu diesem Zwecke verläuft die Kaschierwalze (18) in einem vierten Bad (49) aus Kleber (50). Sie nimmt den Kleber (50) aus dem Bad (49) hoch und überträgt ihn in einer an einem Abstreifer (51) eingestellten Dicke auf die ihr zugewandte Deckschicht (4) der beschichteten Trägerfolie (48). Diese mit der Kleberschicht (6) versehene Trägerfolie (19) kann im Bereich einiger Umlenkrollen (21) umgelenkt und je nach der Art des verwendeten Klebers (15) durch eine Zwischentrocknungsstation (52) geleitet werden, in der der Kleber (50) in einen Zustand versetzt wird, in dem er die Deckschicht (4) mit dem Vlies (7) verkleben kann.

Die mit der Kleberschicht (6) versehene Trägerfolie (19) verläuft in Richtung auf die Kalanderwalzen (10, 11). In dieses Kalanderwalzwerk (10, 11) mündet außerdem das von einer Rolle (24) abgewickelte Vlies (7) und wird innerhalb des Kalanderwalzwerkes (10, 11) mit der Kleberschicht (6) verpreßt, so daß das Vlies (7) über die Kleberschicht (6) mit der Trägerfolie (1) und den auf ihr haftenden Schichten (3, 4) verklebt wird. Unmittelbar nach dem Verlassen des Kalanderwalzwerkes (10, 11) wird die mit dem Vlies (7) beklebte Trägerfolie (19) an einer Umlenkwalze (13) umgelenkt. Nach der Umlenkung kann die Trägerfolie (1) von der Lackschicht (3) abgelöst und auf einer Aufwikkelrolle (14) aufgewickelt werden. Auf dem Vlies (7) haftet die Deckschicht (4) und auf dieser die Lackschicht (3). Das auf diese Weise beschichtete Vlies (20) wird auf eine Spule (15) versandfertig aufgewickelt.

Als Deckschicht (4) kann auch eine Metallschicht auf die Lackschicht (3) aufgedampft werden. Zu diesem Zwecke wird auf die von einer Vorratsspule (9) abgewickelte Trägerfolie (1) zunächst mit Hilfe der Übertragungswalze (31) der Trennlack (33) aufgebracht. Anschließend wird auf den Trennlack mit Hilfe der Übertragungswalze (38) der Lack (34) aufgebracht. Die auf diese Weise mit der Trennnschicht (2) und der Lackschicht (3) beschichtete Trägerfolie (1) läuft durch eine Bedampfungsstation (53), in der eine beheizte Verdampferquelle (54) vorgesehen ist. Aus dieser Verdampferquelle (54) steigt ein Metalldampf (55) in Richtung auf die ihm zugewandte Lacksschicht (3) der Trägerfolie (1) auf und schlägt sich auf ihr als eine Metallschicht nieder. Diese Metallschicht bildet die Deckschicht (4). Die mit dieser Deckschicht (4) versehene Trägerfolie kann unmittelbar mit dem Kleber (50) beschichtet werden. Die Kleberschicht wird sodann mit oder ohne Trocknung in einer Zwischentrocknungsstation (52) in Richtung auf das Kalanderwalzwerk (10, 11) gefördert, wo das Vlies (7) mit der Kleberschicht (6) verklebt wird. Nach Durchlaufen der Umlenkwalze (13) kann die Trägerfolie (1) von dem beschichteten Vlies (20) abgetrennt werden.

Als Trägerfolie kommen alle Folien in Betracht, die eine möglichst glatte Oberfläche haben und in der Lage sind, den während ihrer Bearbeitung auftretenden Zug auszuhalten. In Betracht kommen Kunststoffolien aus PET, Polystyren, Polyvinylchlorid sowie aus einem Polyofin.

Es ist auch möglich, die Deckschicht (4) auf ihrer der Lackschicht (3) abgewandten Seite mit einer Lackzwischenschicht (5) zu versehen, auf die die Kleberschicht (6) vor dem Verkleben mit dem Vlies (7) aufgetragen wird. Diese Lackzwischenschicht (5) kann gasundurchlässig gestaltet werden, um die Schichtstoffkombination gasundurchlässig zu gestalten. Sie kann auch farbig angelegt sein, so daß die Farbe der Lackzwischenschicht (5) die Farbe der Deckschicht (4) beeinflußt, Schließlich kann die Lackzwischenschicht (5) als Klebmittler zwischen der Deckschicht (4) einerseits und der Kleberschicht (6) andererseits ausgebildet sein, die eine gute Haftung auf der Deckschicht (4) und gute Klebqualitäten im Verhältnis zur Kleberschicht (6) aufweist, die ihrerseits optimal hinsichtlich ihrer Qualität zur Haftung auf dem Vlies (7) ausgesucht werden kann.

Im Regelfall besitzt die Kombination aus der Deck- und der Lackschicht (4, 3) mit dem Vlies (7) eine relativ exakt eingehaltene Stärke von 50 bis 100 um. Diese Gesamtstärke der Kombination besitzt eine Toleranz von +/- 10 %. Es ist auch möglich, das Vlies (7) auf seinen beiden Oberflächen mit jeweils einer Deckschicht (4) und einer die jeweilige Deckschicht (4) bedeckenden Lackschicht (3) zu versehen. In jedem Falle ist die - sowohl mit einer als auch mit zwei Deckschichten versehene - Schichtstoffkombination näh- und raffbar. Sie besitzt ein Knitterverhalten wie ein Kleiderstoff und kann sowohl als Dekorationsstoff als auch als Kleiderstoff Verwendung finden. Es ist jedoch auch möglich, sie in Form einer Tapete zu Verwenden, die einen beliebig gestaltbaren Effekt erzeugt. Darüber hinaus kann die Schichtstoffkombination auch als eine Gardine ausgebildet sein. In diesem Falle wird das Vlies (7) als eine feine Gaze verwendet. Die Schichtstoffkombination ist darüber hinaus waschbar und kann nach einem Knittern wieder geglättet werden. Sie ist darüber hinaus auch mit anderen Stoffen beklebbar.

Die Schichtstoffkombination kann auf einen festen Untergrund aufgeklebt werden. Sie kann auch auf Leder, Papier und Textilien aufgeklebt werden. Die Deckschicht kann einfarbig sein oder aus mehreren Farben bestehen, die nebeneinander oder übereinander aufgebracht werden. Darüber hinaus kann die Deckschicht einen spiegelnden oder matten Glanz aufweisen.

Schließlich kann die Deckschicht auf die gesamte Fläche des Vlieses (7) aufgebracht werden. Sie kann aber auch Aussparungen aufweisen, an denen der Blick unmittelbar auf das Vlies freigegeben ist.

Im Regelfall wird die Lackschicht dünner als die Metallschicht sein. Sie kann jedoch auch dicker ausgebildet werden. Die Lackschicht (3) kann durchsichtig oder undurchsichtig sein. Sie kann darüber hinaus auch transparent sein. Auch die Lackschicht kann aus einer oder zwei Farben bestehen, die nebeneinander Verwendung finden. Es können auch zwei Farben übereinander zur Ausbildung der Lackschicht (3) herangezogen werden. Auch die Lackschicht kann einen spiegelnden oder matten Glanz zeigen.

Die Schichtstoffkombination ist auf Grund ihres Aufbaus schneidbar und stanzbar. Sie besitzt eine Dehnung vom 9 % über ihre Länge, bei einer Beanspruchung der Fließbahn in Längsrichtung. Quer zur Bahnrichtung besitzt sie eine Dehnung von 29 %, bevor die Bahn unter der Einwirkung von Zugkräften reißt.

Darüber hinaus ist die Schichtstoffkombination in starkem Maße druckunempfindlich. Unter der Einwirkung einer wie verformenden Druckbelastung regeneriert sie sich innerhalb kurzer Zeit zu ihrer vollen Höhe. Die verformende Druckbelastung kann zu einer dauernden Verformung selbst dann nicht führen, wenn sie etwa 20 Minuten dauert. Trotzdem erreicht die Schichtstoffkombination anschließend wieder ihre Ausgangsstärke von 100 um. Im Anschluß an ihre Regenerierung ist sie stauchfähig.

Darüber hinaus ist die Schichtstoffkombination auch gegen auf sie einwirkende tangentiale Kräfte beständig. Sie ist hitzebeständig und kältebeständig und kann eine flammenwidrige Ausstattung aufweisen. Je nach Verwendung der Lacke und Farben ist sie gegen Sonnenbestrahlung beständig, ohne daß ihre Flexibilität leidet. Darüber hinaus ist sie wasserundurchlässig, wenn entsprechende Lacke eingesetzt werden. Darüber hinaus kann die Lackschicht (3) eine wasserabstoßende Oberfläche aufweisen. Schließlich ist je nach Verwendung der Lackschicht (3) und der Deckschicht (4) die Schichtstoffkombination gasundurchlässig. Im Regelfall wird in diesen Fällen eine gasundurchlässige Lackschicht (3) verwendet. Darüber hinaus kann jedoch auch die Lackschicht (3) mit einer gasundurchlässigen Beschichtung versehen werden.

## Ansprüche

1. Schichtstoffkombination aus einer Trägerschicht, die auf mindestens einer ihrer beiden Oberflächen mit einer Deckschicht und einer die Deckschicht auf ihrer der Trägerschicht abgewandten Seite bedeckenden Lackschicht beschichtet ist, dadurch gekennzeichnet, daß die Trägerschicht ein Vlies (7) ist und die Deckschicht (4) zusammen mit der Lackschicht (3) mit einem im feuchten Zustand klebenden naßkleber auf das Vlies (7) aufgeklebt ist und das mit der Deckschicht (4) und der Lackschicht (3) beklebte Vlies (7) eine Stärke von höchstens 100 um aufweist.

2. Schichtstoffkombination nach Anspruch 1, dadurch gekennzeichnet, daß die Deckschicht (4) aus einer auf die Lackschicht (3) aufgedampften Metallschicht besteht, die nach ihrer Aufdampfung mit ihrer der Lackschicht (3) abgewandten Seite mit dem Vlies (7) verklebt ist.

3. Schichtstoffkombination nach Anspruch 1, dadurch gekennzeichnet, daß die Deckschicht (4) aus einem auf die Lackschicht (3) aufgetragenen Farbüberzug besteht.

4. Schichtstoffkombination nach Anspruch 1 bis 3, dadurch gekennzeichnet, daß die Kombination aus der Deck- und der Lackschicht (4, 3) gemeinsam mit dem Vlies (7) eine Stärke von 50 bis 100 um mit einer Toleranz von +/- 10 % aufweist.

5. Schichtstoffkombination nach Anspruch 1 bis 4, dadurch gekennzeichnet, daß die Kombination us der Deck- und der Lackschicht (4, 3) gemeinsam mit dem Vlies (7) eine Stärke von 100 um mit einer Stärkentoleranz von +/- 10 % aufweist.

6. Schichtstoffkombination nach Anspruch 1 bis 3, dadurch gekennzeichnet, daß auf beide Oberflächen des Vlieses (7) jeweils eine Deckschicht (4) und jeweils eine die Deckschicht (4) auf ihrer dem Vlies (7) abgewandten Seite bedeckende Lackschicht (3) aufgeklebt ist.

7. Schichtstoffkombination nach Anspruch 1 bis 6, dadurch gekennzeichnet, daß sie nähbar ist.

8. Schichtstoffkombination nach Anspruch 1 bis 7, dadurch gekennzeichnet, daß sie raffbar ist.

9. Schichtstoffkombination nach Anspruch 1 bis 8, dadurch gekennzeichnet, daß sie ein Knitterverhalten wie ein Kleiderstoff aufweist.

10. Schichtstoffkombination nach Anspruch 1 bis 9, dadurch gekennzeichnet, daß sie als Dekorationsstoff ausgebildet ist.

11. Schichtstoffkombination nach Anspruch 1 bis 9, dadurch gekennzeichnet, daß sie als Kleiderstoff ausgebildet ist.

12. Schichtstoffkombination nach Anspruch 1 bis 9, dadurch gekennzeichnet, daß sie als Gardine ausgebildet ist.

13. Schichtstoffkombination nach Anspruch 1 bis 12, dadurch gekennzeichnet, daß das Vlies (7) als feine Gaze ausgebildet ist.

14. Schichtstoffkombination nach Anspruch 1 bis 16, dadurch gekennzeichnet, daß sie beklebbar ist.

15. Schichtstoffkombination nach Anspruch 1 bis 14, dadurch gekennzeichnet, daß sie auf Papier aufklebbar ist.

16. Schichtstoffkombination nach Anspruch 1 bis 14, dadurch gekennzeichnet, daß sie auf Textilien aufklebbar ist.

17. Schichtstoffkombination nach Anspruch 1 bis 16, dadurch gekennzeichnet, daß die Deckschicht (4) einfarbig ist.

18. Schichtstoffkombination nach Anspruch 1 bis 16, dadurch gekennzeichnet, daß die Deckschicht (4) mindestens zwei Farben nebeneinander aufweist.

19. Schichtstoffkombination nach Anspruch 1 bis 183, dadurch gekennzeichnet, daß die Deckschicht (4) einen spiegelnden Glanz aufweist.

20 Schichtstoffkombination nach Anspruch 1 bis 18, dadurch gekennzeichnet, daß die Deckschicht (4) einen matten Glanz aufweist.

21. Schichtstoffkombination nach Anspruch 1 bis 20, dadurch gekennzeichnet, daß die Deckschicht Aussparungen aufweist, an denen das Vlies (7) unbedeckt ist.

22. Schichtstoffkombination nach Anspruch 1 bis 21, dadurch gekennzeichnet, daß die Lackschicht (3) dünner als die Metallschicht ist.

23. Schichtstoffkombination nach Anspruch 1 bis 21, dadurch gekennzeichnet, daß die Lackschicht (3) dicker als die Metallschicht ist.

24. Schichtstoffkombination nach Anspruch 1 bis 23, dadurch gekennzeichnet, daß die Lackschicht (3) undurchsichtig ist.

25. Schichtstoffkombination nach Anspruch 1 bis 25, dadurch gekennzeichnet, daß die Lackschicht (3) mindestens zwei Farben nebeneinander aufweist.

26. Schichtstoffkombination nach Anspruch 1 bis 25, dadurch gekennzeichnet, daß sie schneidbar ist.

27. Schichtstoffkombination nach Anspruch 1 bis 26, dadurch gekennzeichnet, daß sie stanzbar ist.

28. Schichtstoffkombination nach Anspruch 1 bis 27, dadurch gekennzeichnet, daß sie sich um 9 % ihrer Länge in Längsrichtung einer Bahn dehnt, bevor diese unter der Einwirkung von Zugkräften reißt.

29. Schichtstoffkombination nach Anspruch 1 bis 28, dadurch gekennzeichnet, daß sie sich um 29 % ihrer Breite quer zur Längsrichtung einer Bahn dehnt, bevor diese unter der Einwirkung von Zugkräften reißt.

30. Schichtstoffkombination nach Anspruch 1 bis 29, dadurch gekennzeichnet, daß sie eine flammenwidrige Ausstattung aufweist.

31. Schichtstoffkombination nach Anspruch 1 bis 30, dadurch gekennzeichnet, daß sie beständig gegen Sonnenbestrahlung ist.

32. Schichtstoffkombination nach Anspruch 1 bis 31, dadurch gekennzeichnet, daß die Lackschicht (13) eine wasserabstoßende Oberfläche aufweist.

33. Schichtstoffkombination nach Anspruch 1 bis 32, dadurch gekennzeichnet, daß die Lackschicht (3) fluoreszierend ist.

34. Schichtstoffkombination nach Anspruch 1 bis 32, dadurch gekennzeichnet, daß die Lackschicht (3) lichtreflektierend ist.

35. Schichtstoffkombination nach Anspruch 1 bis 34, dadurch gekennzeichnet, daß die Lackschicht bedruckbar ist.

36. Schichtstoffkombination nach Anspruch 1 bis 35, dadurch gekennzeichnet, daß sie durch Druckkräfte profilierbar ist.

37. Schichtstoffkombination nach Anspruch 1 bis 36, dadurch gekennzeichnet, daß die Lackschicht (3) verseifbar ist.

38. Verfahren zur Herstellung einer Schichtstoffkombination aus gemäß Ansprüche 1 bis 37 einer Trägerschicht mit mindestens einer Deckschicht und einer die Deckschicht auf der der Trägerschicht abgewandten Seite bedeckenden Lackschicht, bei dem die Deckschicht zusammen mit der Lackschicht mittels eines auf die der Trägerschicht zugewandte Seite der Deckschicht aufgetragenen Klebers auf die Trägerschicht aufgeklebt wird, dadurch gekennzeichnet, daß zunächst die Lackschicht und anschließend die Deckschicht auf eine Trägerfolie aufgetragen wird, daß ein in seinem feuchten Zustand klebender Naßkleber auf die der Trägerfolie (1) abgewandte Seite der Deckschicht (4) aufgetragen wird und als Trägerschicht ein Vlies (7) im Anschluß an das Auftragen des Naßklebers mit der Deckschicht (4) verklebt wird und anschließend die Trägerfolie (1) von der Lackschicht (3) getrennt wird.

39. Verfahren nach Anspruch 38, dadurch gekennzeichnet, daß auf die Trägerfolie (1) vor dem Auftrag der Lackschicht (3) eine Trennschicht (2) aufgetragen wird und die Deckschicht (4) und die Lackschicht (3) beim Übertragen auf das Vlies (7) von der Trennschicht (2) gelöst wird.

Fig.1

Fig.2

Fig. 3

Fig. 4

Fig. 5

# Fig. 6